(19) Europäisches Patentamt
European Patent Office
Office européen des brevets

(11) **EP 1 825 608 B1**

(12) **FASCICULE DE BREVET EUROPEEN**

(45) Date de publication et mention
de la délivrance du brevet:
**07.05.2008 Bulletin 2008/19**

(21) Numéro de dépôt: **05816283.5**

(22) Date de dépôt: **02.12.2005**

(51) Int Cl.:
***H04B 7/185*** (2006.01)

(86) Numéro de dépôt international:
**PCT/EP2005/056426**

(87) Numéro de publication internationale:
**WO 2006/061353 (15.06.2006 Gazette 2006/24)**

(54) **ARCHITECTURE POUR SIMULATION D'ABONNES SUR UN RESEAU ATN**

ARCHITEKTUR FÜR TEILNEHMERSIMULATION AUF EINEM ATN

ARCHITECTURE FOR SUBSCRIBER SIMULATION ON AN ATN

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **07.12.2004 FR 0413022**

(43) Date de publication de la demande:
**29.08.2007 Bulletin 2007/35**

(73) Titulaire: **THALES**
**92200 Neuilly sur Seine (FR)**

(72) Inventeurs:
• **PALETOU, Christophe**
**F-31320 CASTANET TOLOSAN (FR)**
• **ROBERT, Laurent**
**F-11400 CASTELNAUDARY (FR)**
• **CORNIOT, Christian**
**F-92350 LE PLESSIS ROBINSON (FR)**

(74) Mandataire: **Lucas, Laurent Jacques**
**Marks & Clerk France**
**31-33, Avenue Aristide Briand**
**F-94117 Arcueil Cedex (FR)**

(56) Documents cités:
**WO-A-00/38352      WO-A-02/060155**
**US-A1- 2004 019 457**

EP 1 825 608 B1

**Description**

La présente invention se rapporte au domaine des réseaux de communications ayant une structure semblable au réseau de télécommunications aéronautiques ATN (acronyme de la dénomination anglo-saxonne "Aeronautical Telecommunications Network"). L'invention porte en particulier sur la manière de simuler de manière simple un grand nombre d'abonnés échangeant des informations via un réseau ATN avec un équipement sous test afin de tester l'aptitude de l'équipement à échanger, par un réseau ATN, des informations avec un grand nombre d'abonnés.

Le réseau ATN est destiné à relier entre eux les sous-réseaux ou réseaux locaux, utilisés par les différents intervenants du domaine de l'aviation civile parmi lesquels on peut citer les services du contrôle aérien, les compagnies aériennes, les aéronefs, les services météo ou encore les services aéroportuaires. Le réseau ATN a pour objet un échange de données (ordre de contrôle, messages météo, paramètres de vol, reports de position, communications passagers, etc.) à la fois fiable et performant. Le réseau ATN est un réseau encore émergeant, qui met en oeuvre des protocoles d'échange de messages déterminés. Le format des messages échangés ainsi que la structure des protocoles utilisés sont normalisé par l'Organisation de l'Aviation Civile Internationale connue sous l'acronyme français OACI ou sous l'acronyme anglo-saxon IACO. Cette standardisation est formalisée au travers de la norme ISO 9705 et de standards élaborés par l'OACI et connu sous l'appellation anglo-saxonne "Standard and Recommended Practices" ou SARPs. Cette normalisation repose sur le modèle d'architecture de réseau OSI, acronyme de l'expression anglo-saxonne "Open System Interconnection". Le modèle OSI est celui défini par l'Organisation Internationale de Normalisation ou ISO. Le réseau ATN peut ainsi être défini comme étant un réseau d'échanges de données entre des aéronefs et des équipements au sol ou encore entre des équipements au sol et d'autres équipements au sol.

Pour répondre aux différentes applications envisagées, les standards SARPs définissent un grand nombre de pile de protocole de type OSI qui prennent en compte les fonctionnalités réseau nécessaires aux diverses entités fonctionnelles constituant le réseau ATN, comme par exemple les terminaux air ou encore les routeurs ou Ground Boundary Intermediate Systems (GBIS) selon la dénomination anglo-saxonne.

Conformément aux SARPs, chaque élément destiné à fonctionner comme une entité réseau ATN à part entière, est interfacée au réseau ATN au moyen d'une structure protocolaire unique appelée Pile ATN, configurée de manière appropriée. Un élément est considéré comme une entité réseau ATN à part entière s'il possède une adresse propre sur le réseau, comme c'est par exemple le cas des terminaux air ou AES, des GBIS, ou encore de terminaux sol ou GES.

Dans le domaine du trafic aérien, les réseaux de communication ATN, quoique encore émergeants, sont considérés comme la norme devant être appliquée aux nouvelles infrastructures de télécommunications et plus généralement d'échanges d'informations. De sorte que les nouveaux systèmes de contrôle au sol du trafic aérien doivent être par exemple en mesure de superviser au travers de réseaux ATN l'ensemble du trafic compris dans leur zone de couverture ou Flight Information Region (FIR) selon la dénomination anglo-saxonne.

Pour des raisons de sûreté évidente, il est donc nécessaire de pouvoir effectuer des tests en vraie grandeur des équipements développés avant leur mise en service opérationnelle. De même, lors de la mise en place d'un réseau ATN il est nécessaire de s'assurer que les éléments d'infrastructure de ce réseau sont bien correctement configurés. Cependant, comme beaucoup de réseaux de communication un réseau ATN véhicule en fonctionnement opérationnel un flux de communication très important.

Si l'on s'intéresse en particulier au système de contrôle qui gère une zone de couverture du trafic aérien, on constate que le nombre d'intervenants qui communiquent avec le système de contrôle via le réseau est très important. Ces intervenants qui constituent des entités réseau, sont en particulier les aéronefs qui évoluent dans la zone couverte par le système et dont le nombre peut couramment avoisiner le millier.

Pour tester les performances d'un tel système de contrôle et en particulier sa capacité à gérer plusieurs centaines de communications via un réseau ATN, il faut disposer de moyens permettant de simuler plusieurs centaines d'intervenants, ou entités réseau, qui communiquent avec le système, chaque entité réseau étant interfacée au réseau par sa propre pile ATN et étant identifiée par une adresse réseau particulière, comme dans le cas d'intervenant réels. On conçoit donc qu'un tel test pose de sérieux problème de mise en oeuvre. Il n'existe d'ailleurs pas à ce jour, dans les recommandations SARPs de l'OACI, de recommandations explicites concernant la façon de réaliser des tests ou la structure des moyens de simulation à employer

La seule solution envisagée à l'heure actuelle pour réaliser un test fiable, consiste à mettre en oeuvre autant de moyens de simulation que l'on veut simuler d'entités réseau, chaque moyen de simulation comportant une pile ATN permettant de l'interfacer avec le réseau sur lequel est connecté le système à tester. Les piles étant reliées à des moyens de calculs permettant de réaliser la simulation. Cette solution coûteuse et difficile à mettre en oeuvre conduit souvent à limiter la simulation à un nombre d'entités réseau moindre que dans la réalité et donc à réaliser un test moins complet. Une telle solution n'a d'ailleurs à ce jour pas été concrétisée par une réalisation.

Par ailleurs, aucune autre solution n'a été proposée permettant de tester la capacité d'un système à échanger des informations de manière sûre, via un réseau ATN, avec un grand nombre d'entités réseau.

Pour résoudre le problème évoqué précédemment et réaliser un test à la fois exhaustif et de réalisation raisonnable la solution proposé par la demanderesse consiste à développer un moyen de simulation ayant une architecture propre lui permettant de simuler une pluralité d'intervenants, ou entités réseau, au travers d'une unique interface réseau. A cet effet, l'architecture selon l'invention comporte en particulier une pile ATN modifiée permettant avantageusement d'ouvrir sur le réseau ATN plusieurs canaux de communication distincts pour une même application, cette application étant mise en oeuvre par plusieurs entités simulées simultanément. La modification de la pile ATN porte en particulier sur les couches supérieures ULCS et ASE.

Selon l'invention, chaque application est associée au niveau du réseau à un identifiant unique et chaque identifiant réseau correspondant à une application unique.

Selon l'invention, la pile ATN modifiée comporte avantageusement des couches applicatives ASE modifiées pour interfacer plusieurs applications de même type j chaque application étant mise en oeuvre par une entité simulée i donnée, une couche ASE modifiée attribuant à chaque application j mise en oeuvre, un identifiant AEq(i, j) fonction de l'application j mise en oeuvre et de l'entité simulée i qui la met en oeuvre.

Selon l'invention la pile ATN modifiée présente l'avantage de comporter une couche applicative ULCS modifiée pour effectuer l'associations des identifiants d'applications AEq(i, j) avec des identifiants réseaux $T_{SEL}(i, ,j)$ chaque identifiant $T_{SEL}(i, j)$ correspondant de manière univoque à l'identifiant AEq(i, j) correspondant.

Selon l'invention, la couche ULCS modifié utilise une base de donnée paramétrée par l'identifiant i de l'entité simulée et l'identifiant j de l'application considérée. Cette base de donnée peut avantageusement avoir un taille variable en fonction de la complexité de la séquence de simulation effectuée.

Cette pile ATN modifiée permet donc avantageusement de simuler avec une seule structure protocolaire une pluralité d'intervenants, ou entités réseau, tel que des aéronefs. Chaque entité réseau pouvant mettre ouvrir plusieurs canaux de communications au travers du réseau ATN.

Elle permet également de respecter les normes protocolaires du Réseau ATN et par conséquent d'être sans influence sur le fonctionnement normal du réseau. Elle permet ainsi de réaliser des tests dans des conditions de trafic sensiblement identiques aux conditions réelles. Elle permet en outre avantageusement de faire varier au cours du temps, sans ajout ou retrait de moyens sur le réseau, le nombre d'entités réseau simulées et ainsi d'effectuer des simulations de complexité croissante.

D'autres caractéristiques et avantages pourront apparaître dans la description détaillée qui suit, description qui s'appuie sur les figures annexées qui représentent:

- la figure 1, une illustration de principe de la structure d'un réseau ATN,

- la figure 2, une illustration de principe de la simulation envisagée selon l'invention,

- la figure 3, la structure d'une pile ATN standard,

- la figure 4, la structure de la pile ATN modifiée selon l'invention,

- la figure 5, une illustration du principe d'adressage d'une pile ATN standard,

- la figure 6, le principe d'adressage d'une pile ATN modifiée selon l'invention,

L'objet de la description qui suit n'est pas de réaliser une description exhaustive des réseaux ATN tels qu'ils sont notamment définis par l'OACI, ni même d'effectuer une description complète des échanges existant entre les différentes couches logicielles constituant une pile ATN. Ces informations sont accessibles au travers des différents documents de définition et de normalisation publiés à ce sujet. On peut citer à ce titre le document "Comprehensive ATN manual - 1st édition 2001 - ICAO Doc 9739" définissant en particulier la structure d'un réseau ATN, et définissant la structure d'une pile d'échanges ATN. On se contentera dans ce document de définir en quoi l'architecture selon l'invention diffère de l'architecture standard et en quoi ces différences répondent au problème posé.

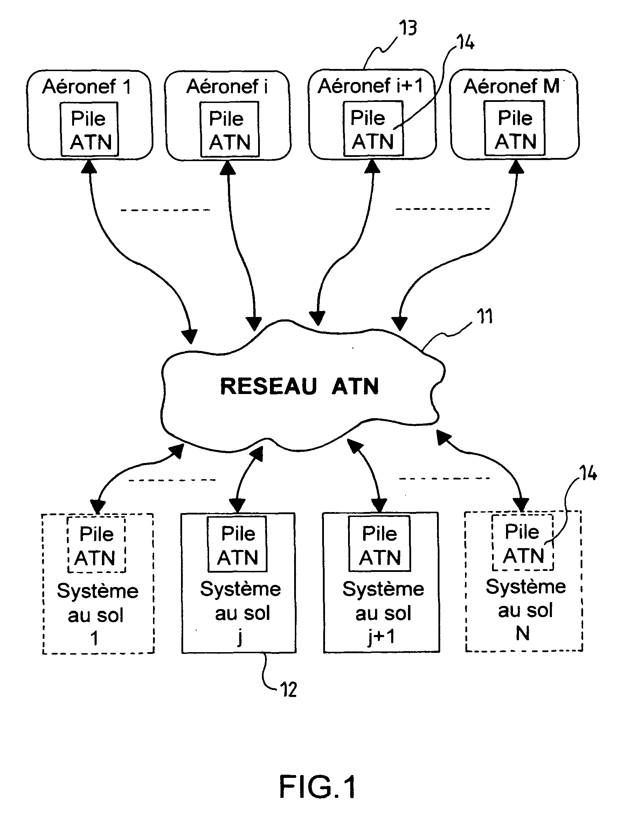

La figure 1 présente de manière synoptique, l'organisation d'un réseau ATN. Comme on peut le constater sur la figure 1, un réseau ATN s'organise autour d'une structure de communication 11 sur laquelle viennent s'interfacer des éléments terminaux ou entités ATN. S'agissant de communications du domaine de l'aéronautique, on trouve en particulier des terminaux au sol 12 qui peuvent être de natures diverses, comme par exemple des centres de contrôle du trafic, des centres d'observations météorologiques ou encore des compagnies aériennes. On trouve également des terminaux aériens 13, en particuliers des avions de lignes ou plus généralement des aéronefs. Chacune de ces entités ATN reconnues, échange des informations avec les autres entités au moyen d'une pile ATN 14 qui gère pour chaque entité à la fois les informations qu'elle transmet que celles qu'elle reçoit.

La figure 1 permet de mettre en évidence le niveau de complexité que peut atteindre pour une entité, la gestion des informations dans une telle structure. S'agissant en particulier d'un centre de contrôle du trafic aérien auquel est affectée une zone de l'espace aérien donnée, la quantité d'informations échangées en particulier avec les aéronefs 13 évoluant dans la zone, est importante, sachant que le traitement d'un nombre non négligeable de ces informations nécessite la supervision d'un opérateur humain. Lors de la mise en service ou du test d'un tel système, il est donc très important de pouvoir déterminer si ce système dispose des capacités suffisantes pour garantir l'intégrité de tous les échanges d'informations qu'il doit assurer, en particulier avec la totalité des aéronefs situés dans la zone de l'espace aérien qu'il contrôle. Pour effectuer un tel test on doit mettre en oeuvre des simulations qui reflètent le plus fidèlement possible une situation réelle d'échanges. Or de telles simulations supposent elles-mêmes la mise en oeuvre d'entités ATN simulées chaque entité étant interfacée au réseau par une pile ATN 14, la solution la plus évidente étant de mettre en oeuvre une pile ATN par entité simulée. On obtient ainsi, par exemple, une simulation pour laquelle chaque aéronef est simulé par un moyen de calcul comportant sa propre interface avec le réseau ATN 11. Ce mode de réalisation d'un test de simulation, paraît cependant extrêmement difficile à mettre en oeuvre eut égard à la quantité d'interfaces à utiliser si l'on veut effectuer une simulation proche d'une situation réelle pour laquelle le système de contrôle peut échanger des informations avec plusieurs centaines d'aéronefs.

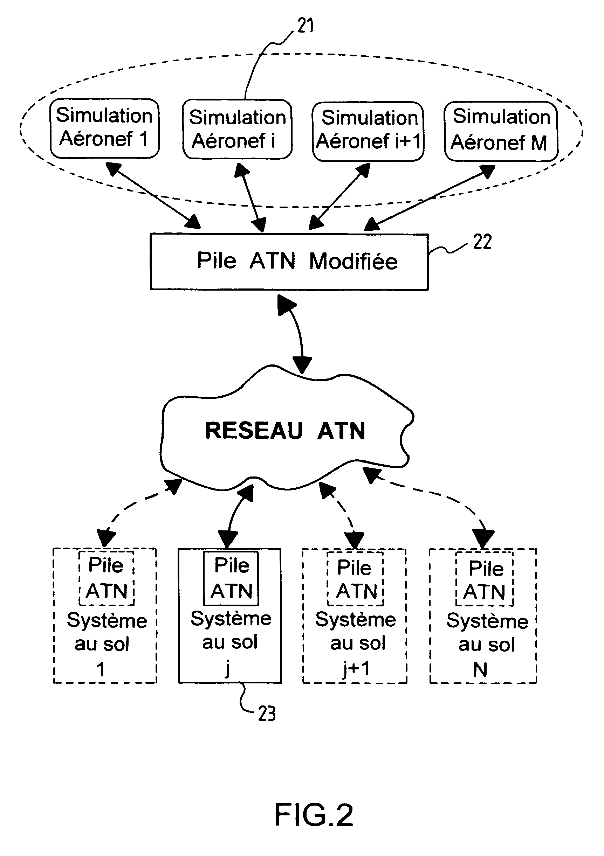

La figure 2 présente de manière schématique la solution mise en oeuvre par l'invention. Suivant cette solution les simulations des diverses entités ATN que constituent les aéronefs, sont réalisées par des moyens de calculs associés à une seule interface réseau 22 comportant une pile ATN modifiée à cet effet. Cette interface unique permet aux moyens de simulation d'échanger des informations avec le système de contrôle 23 sous test, comme autant d'entités ATN indépendantes.

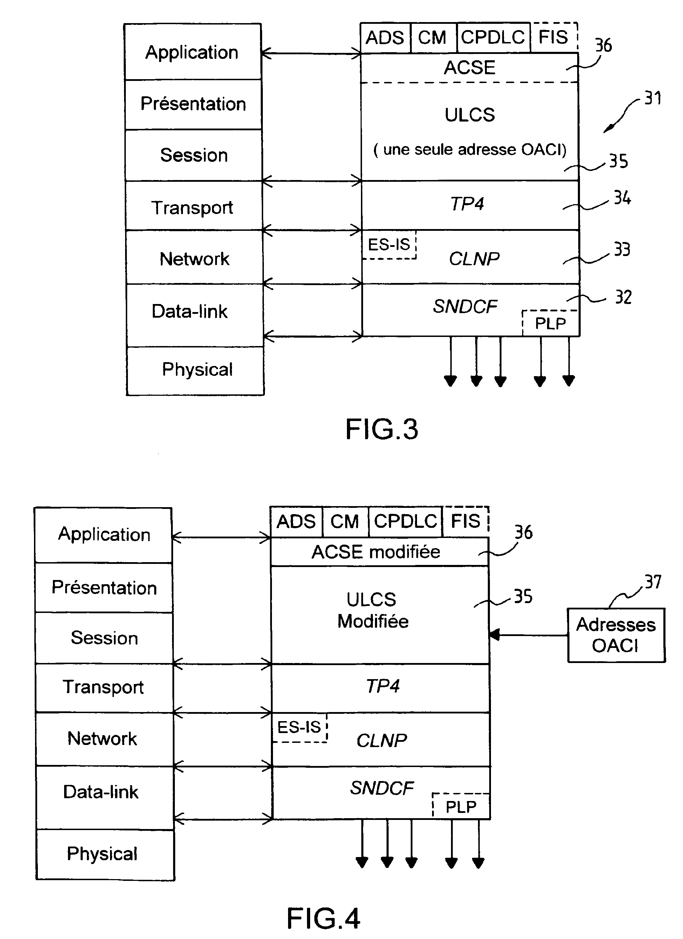

Les figures 3 et 4 présentent de manière schématique la structure en couches de la pile ATN standard et de la pile ATN modifiée. Elles servent ainsi d'introduction à la description du principe de l'invention.

La figure 3 présente la structure d'une pile ATN standard 31, mise en regard d'une structure d'échanges classique de type OSI (acronyme de "Open System Interface" selon la dénomination anglo-saxonne).

Outre la couche physique proprement dite, une pile OSI comporte de manière classique une couche "Liaison de Données" (ou "Data-link"), une couche "Réseau" (ou "Network"), et une couche Transport qui marque la frontière entre les couches purement physiques et les couches logiques de la structure. Elle comporte également une couche "Session", une couche "Présentation" et une couche application. La figure 4 montre les équivalences de structure existant entre une pile OSI et une pile ATN.

Dans la pile ATN, les fonctionnalités de la couche "Liaison de Données" sont remplies par la couche 32 "SNDCF" (acronyme de la dénomination anglo-saxonne "SubNetwork Dependent Convergence Functions"). De même celles de la couche "Réseau" sont remplies par la couche 33 "CLNP" (pour "Connection Less Network Protocol"), tandis que celles de la couche "Transport" sont remplies par la couche 34 "TP4" (pour "Transport layer class 4"). Les couches 35 "ULCS" (pour "Upper Layer Communication Services") et 36 "ACSE" (pour "Association Control Service Element") remplissent quant à elles les fonctionnalités des couches "Session", "Presentation" et de la partie basse de la couche "Application" (couche 7a du modèle OSI).

En ce qui concerne l'objet de l'invention il n'est pas nécessaire d'entrer plus dans le détaille de la structure et de la fonction des différentes couches de protocole. Cependant pour plus de détail il est possible de consulter des ouvrages se rapportant au protocole OSI, ainsi que les normes et recommandation relatives au x réseaux ATN mentionnées précédemment. Dans le cadre de l'invention, seules les couches ULCS, 35, et ACSE, 36, sont concernées.

La figure 4 reprend le dessin de la figure 3 et met en évidence les couches modifiées dans la structure de pile ATN selon l'invention. Comme le montre la figure 4, les couches 35 et 36 subissent une modification visant à introduire au niveau des couches logiques d'une pile ATN la prise en compte de l'adresse OACI comme un paramètre 37 intervenant dans la gestion des données transitant de la couche ACSE, qui fait l'interface avec les différentes applications, à la couche de transport TP4 et inversement. La prise en compte de ce paramètre supplémentaire permet d'affecter des identifiant différents à une même application afin de simuler plusieurs entités pourvues de cette même application.

Ainsi, si l'on veut par exemple simuler plusieurs aéronefs il faut être en mesure de simuler une fonction CPDLC pour chaque aéronef simulé. Grâce à l'invention, cette simulation peut être réalisée de manière simple au moyen d'une seule pile ATN, en attribuant à chaque application CPDLC simulée un identifiant permettant à la fois de déterminer que l'application est de type CPDLC et qu'elle concerne un aéronef particulier défini par son adresse OACI.

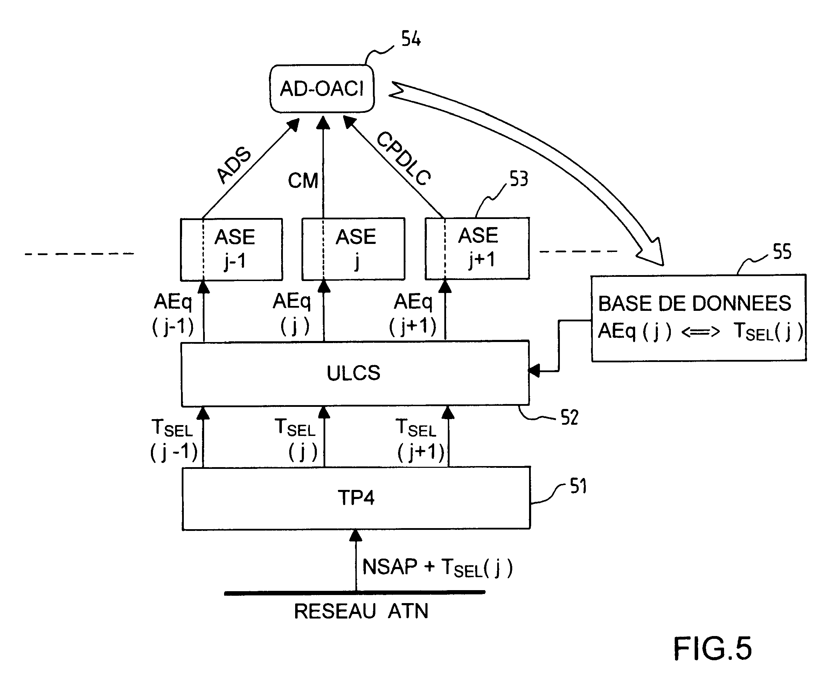

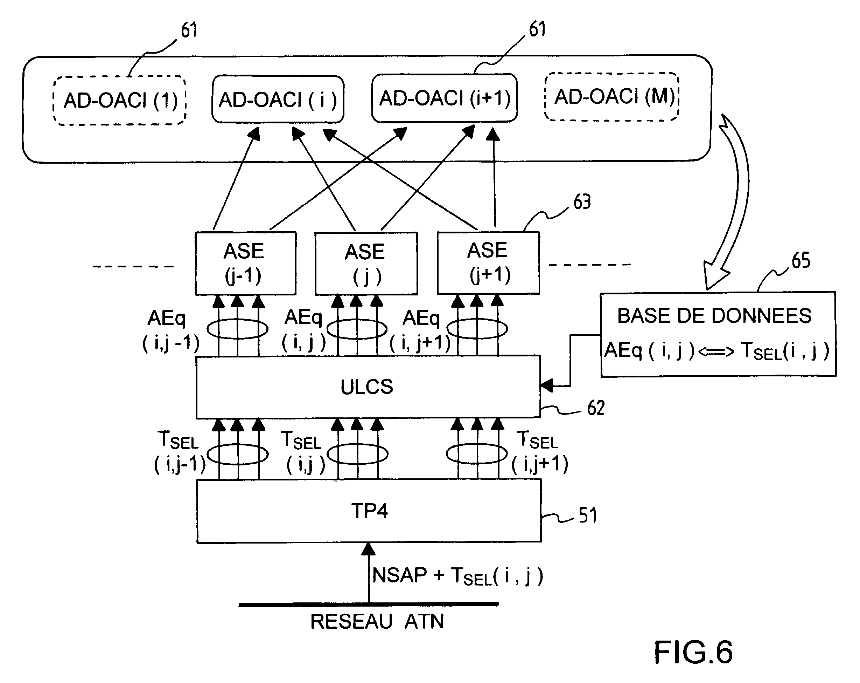

Les figures 5 et 6, qui mettent en évidence de manière plus précise l'invention revendiquée. La figure 5 illustre de manière simplifiée et fonctionnelle la façon dont sont normalement réalisés les échanges entre le réseau ATN et les diverses applications pouvant être mises en oeuvre par une entité ATN, de type Aéronef, par exemple. La figure 6, quant à elle illustre la façon dont sont simulés les mêmes échanges au moyen d'une pile ATN modifiée selon l'invention. Sur ces deux figures l'encadré intitulé ULCS regroupe la couche ULCS et la couche ACSE. De même les couches situées entre le réseau ATN proprement dit et la couche TP4 ne sont pas représentées.

Dans le cas d'un fonctionnement opérationnel classique, illustré par la figure 5, les échanges de données entre le réseau ATN et les applications mises en oeuvre par un terminal (une entité réseau) de type aéronef par exemple, sont basés sur l'unicité de l'adresse OACI affectée au terminal.

Au niveau de la couche de transport TP4, 51, c'est à dire sous la couche logique ULCS, 52, l'application mise en oeuvre par le terminal est identifiée d'une part par l'identifiant NSAP (pour "Network Service Access Point" selon la dénomination anglo-saxonne) qui représente l'adresse de la pile ATN sur le réseau, d'autre part par l'identifiant $T_{SEL}$ (pour "Transport Selector") qui représente le canal attribué à l'application considérée. Ainsi, au niveau du réseau, une application donnée d'un terminal donné est identifiée par NSAP + $T_{SEL}$. L'information NSAP est reconnue au niveau de la couche de transport qui traite et transmet l'identifiant $T_{SEL}$ associé à la couche ULCS.

Au-dessus de la couche ULCS se trouvent les couches applicatives ou ASE (pour "Application Service Element"), 53, qui dialoguent avec la couche ULCS 52 au travers de la couche d'interface ACSE. Ces couches ASE 53 permettent d'adresser les différentes applications mises en oeuvre par un terminal au travers des leurs identifiants AEq (pour "Application Entity qualifier"). Chaque identifiant ou qualifier correspond donc à l'adresse d'une des applications du terminal considéré, une pile ATN ne servant d'interface que pour un seul terminal 54, identifié par l'adresse OACI qui lui est attribuée. Par ailleurs, les identifiants AEq sont représentés par des nombres ayant des valeurs normalisées, l'identifiant AEq correspondant à l'application CPDLC pour un aéronef ayant par exemple pour valeur 2.

Pour pouvoir interfacer une application particulière avec le réseau ATN, il est donc nécessaire de pouvoir associer son identifiant AEq avec l'identifiant $T_{SEL}$ correspondant de la couche de transport. L'identifiant $T_{SEL}$ associé à l'identifiant AEq ayant une valeur quelconque non normalisée. L'opération d'association est réalisée par la couche ULCS.

En mode opérationnel cette tache de transcodage reste relativement simple. En effet un canal de transmission ouvert pour le transfert d'informations d'une application donnée vers un autre terminal, un centre de contrôle par exemple, sera dédié exclusivement à l'application considérée pour le terminal considéré. Ainsi, une application j, affectée de l'identifiant Aeq(j), d'un terminal affecté lui-même de l'adresse OACI AD_OACI, sera associée au niveau du réseau à un identifiant NSAP et un identifiant $T_{SEL}$(j). L'association est réalisée au niveau de l'ULCS au moyen d'une base de donnée 55 qui établit la correspondance entre l'identifiant AEq(j) d'une application j donnée et l'identifiant $T_{SEL}$ correspondant au canal ouvert pour cette application au niveau du réseau ATN.

Ainsi, par exemple, l'accès d'un centre de contrôle à terre à une application donnée j mise en oeuvre par un aéronef, se traduira par l'envoi sur le réseau par le centre à terre de l'identifiant $T_{SEL}$(j). La couche TP4, 51, transmettra l'identifiant $T_{SEL}$(j) à la couche ULCS 52 dont le rôle sera d'associer à cet identifiant $T_{SEL}$(j) un identifiant AEq(j) désignant l'application j. Cet identifiant accompagnant les informations échangées par l'application j et le centre à terre permettra leur prise en compte par l'ASE correspondant à l'application j et par elle seule.

La figure 5 illustre cet adressage pour l'exemple particulier de la pile ATN d'un aéronef. Dans cet exemple les trois applications j-1, j, et j+1 représentent trois applications particulières: les applications ADS (pour "Automatic Dépendent Surveillance" selon la terminologie anglo-saxonne), CM ( pour "Context management") et CPDLC (pour "Controller-Pilot Data Link Communication".

Pour permettre l'interfaçage de plusieurs terminaux simulés 61 par une seule pile la pile ATN selon l'invention présente une structure d'échange modifiée. Comme on peut le constater sur la figure 6 cette modification consiste à remplacer les parties basses des couches ASE de façon à ce que chaque ASE correspondant à un type d'application donné (ADS, CM, ou CPDLC par exemple), dispose d'un nombre d'identifiants AEq égal au nombre d'aéronefs qu'il est possible de simuler. La modification consiste également à modifier la couche ULCS standard en une couche ULCS modifiée 62 capable d'associer à chaque identifiant AEq(i, j) transmis par les ASE modifiées, AEq(i, j) correspondant à l'application j mise en oeuvre par l'aéronef i, un identifiant $T_{SEL}$(i, j), correspondant à un canal ouvert pour l'application j du terminal simulé i.

La couche ULCS 62 utilise une base de données 63 enrichie qui permet de déterminer l'identifiant AEq(i, j) correspondant à un identifiant $T_{SEL}$(i, j) donné. Cette base de donnée 63, permet à l'ULCS de faire correspondre à identifiant $T_{SEL}$(i, j) unique l'application j mise en oeuvre par le terminal simulé i. Par suite, cette application j sera identifiée au niveau du réseau ATN par l'ensemble des deux identifiants NSAP et $T_{SEL}$(i, j).

La base de données enrichie 63 permet à l'ULCS d'établir une correspondance lien établit la correspondance entre l'identifiant AEq(i, j) d'une application j donnée d'un terminal i donné et l'identifiant $T_{SEL}$(i, j). Elle permet ainsi à une ASE donnée, dédiée à une application particulière j, de disposer d'autant de canaux de communication qu'il y a d'entités i à simuler qui mettent en oeuvre cette application, chacune de ses entités étant identifiée par son adresse AD_OACI(i). De la sorte l'invention permet de simuler un grand nombre d'entités au travers d'une seule pile ATN.

Cette base de donnée modifiée est renseignée à partir des scénarios de simulation définis. Ainsi plus le nombre d'entités simulées est important plus cette base de donnée est grande.

La base de donnée modifiée 63 peut en particulier être un élément paramétré et téléchargeable. Ainsi, une même pile ATN peut être utilisée pour mettre en oeuvre différents scénarios de test. Le changement de scénario se traduisant simplement au niveau de la pile par la lecture d'une nouvelle base de donnée téléchargée.

En pratique un scénario de test ou de simulation peut par exemple correspondre à un logiciel donné mis en oeuvre par un calculateur. Pour les besoins du dialogue avec d'autres entités réelles ou simulées au travers du réseau ATN, ce logiciel peut en particulier faire appel à une routine générique implémentant la pile ATN. Cette routine comportant, au niveau d'une sous-routine de gestion de la couche ULCS, un accès à une base de donnée téléchargeable contenant notamment la table de correspondances entre les identifiants $T_{SEL}(i, j)$ et les identifiants AEq(i, ,j). Dans ce cas, une des tâches du logiciel de test ou simulation consiste à ce titre à renseigner la base de donnée 63 en fonction du nombre d'applications et d'entités simulées. De la sorte, à chaque requête d'accès d'une application au réseau ATN la sous-routine qui gère la couche ULCS établit la concordance entre l'identifiant AEq de la couche applicative ASE et l'identifiant $T_{SEL}$ de la couche de transport et des couches inférieures. Un canal de communication est ainsi établi.

Comme on peut le constater à partir de la description qui précède, la mise en oeuvre de l'invention repose non seulement sur l'utilisation d'une base de donnée enrichie 63, mais aussi sur la modification des sous-couches les plus basses des couches ASE modification qui rend possible, pour un type d'application donné, l'affectation d'un identifiant AEq à chacune des entités simulées.

Dans la mesure où la pile ATN est utilisée pour des procédures de test et de simulation, Il est possible d'affecter à chaque identifiant AEq une valeur purement arbitraire, en procédant par exemple par ordre croissant. On peut ainsi attribuer à une couche ASE donnée n identifiants AEq(i, j) dont les valeurs se suivent, et la couche ASE suivante des identifiants AEq(i, j) dont les valeurs suivent immédiatement les premières. Cependant, un mode d'implémentation avantageux de la pile ATN selon l'invention consiste à attribuer à chaque ASE un champ de valeur d'identifiant AEq possible et a donner à chaque identifiant une valeur comprise dans ce champ et fonction du u rang i attribué à l'entité simulée. La taille du champ pouvant être un paramètre dont la valeur est déterminée par la procédure de test exécutée. Ainsi, si on envisage une procédure de test d'un système au sol, un centre de contrôle à terre par exemple, cette procédure de test peut inclure la simulation de plusieurs centaines d'aéronefs chaque aéronef mettant en oeuvre des applications standard telles que citées précédemment. La pile selon l'invention peut alors comporter autant de couches ASE qu'il y a de type d'applications (CM, CPDLC, etc..), chaque application interfacée par une ASE donnée étant associée à un identifiant AEq défini par la relation suivante:

$$AEq(i, j) = AEq(j) \cdot Nb\_Entités + i \qquad [1]$$

Dans la relation [1], AEq(i, j) représente l'identifiant de la fonction j mise en oeuvre par l'entité simulée i, AEq (j) étant l'identifiant de l'application j pour une pile ATN standard. En fonctionnement réel, la valeur de l'identifiant AEq (j) correspondant à une application j donnée est, comme il a été dit précédemment, une valeur normalisée, l'application CM ayant par exemple pour identifiant AEq(CM) = 2.

Nb_Entités représente, quant à lui, le nombre maximum d'entités simulées.

Le nombre i attribué à une entité simulée identifiée par AD_OACI(i), est quant à lui fonction de l'ordre chronologique d'enregistrement des entités pendant l'exécution de la procédure de test.

Ainsi, pour une procédure de test pouvant mettre en oeuvre jusqu'à 1000 aéronefs, Nb_Entités aura pour valeur 1000, et l'identifiant de l'application CM mise en oeuvre par l'entité simulée 123 aura pour valeur:

$$AEq(123, CM) = 2 \cdot 1000 + 123 = 2123$$

Ce mode de mise en oeuvre de l'invention consistant à attribuer à chaque identifiant AEq(i, j) une valeur définie par la relation [1] présente l'avantage de permettre la mémorisation de l'ensemble des valeurs prise par les identifiants AEq dans une table de taille paramétrable par le nombre Nb_Entités d'entités simulées. Elle permet également avantageusement de lier la valeur de l'identifiant associé à une application donnée au numéro de l'entité simulée et à la valeur normalisée prise par l'identifiant de l'application en fonctionnement réel. Connaissant AEq(i, j) et le nombre Nb_Entités, AEq(j) et i peuvent alors être simplement déterminé par les relations suivantes:

$$AEq(j) = E( AEq(i, j) / Nb\_Entités) \qquad [2]$$

$$I = AEq(i, j) \text{ modulo } Nb\_Entités \qquad [3]$$

Dans la relation [2], "E" représente la fonction "partie entière".

Dans ce mode de mise en oeuvre de l'invention, la base de donnée permettant à la couche ULCS d'associer $T_{SEL}(i, j)$ à AEq(i, ,j) se présente avantageusement sous la forme d'un fichier descripteur simple élaboré par le programme implémentant la procédure de simulation et pouvant être lu par la fonction ULCS de la routine qui implémente la pile ATN. Ce fichier ne contient pour chaque application que les informations nécessaires pour associer un identifiant $T_{SEL}$ à l'identifiant AEq correspondant à cette application; la nature de l'application considérée ainsi que son rattachement à une entité simulée donnée pouvant avantageusement être déduit de la valeur de l'identifiant AEq.

Le mode de réalisation décrit dans les paragraphes précédents, quoique présent de nombreux avantages, est présenté dans ce document uniquement à titre d'exemple non limitatif. D'autres modes de mise en oeuvre d'une pile ATN modifiée selon le principe de l'invention sont bien entendu envisageables.

**Revendications**

1. Architecture de simulation d'entités sur un réseau ATN, chaque entité simulée, i, mettant en oeuvre des applications j procédant à des échanges d'informations par le réseau ATN, par l'intermédiaire d'une pile d'échanges ATN, une même application j pouvant être mise en oeuvre simultanément par plusieurs entités simulées i, **caractérisée en ce que** la structure de la pile d'échange ATN (22) a été modifiée pour permettre l'interfaçage de l'ensemble des applications simulées au travers d'une pile ATN unique, chaque application étant associée au niveau du réseau à un identifiant unique et chaque identifiant réseau correspondant à une application unique.

2. Architecture de simulation d'entités sur un réseau ATN selon la revendication 1, **caractérisée en outre en ce que** la pile ATN modifiée comporte des couches applicatives ASE (63) modifiées pour interfacer plusieurs applications de même type j chaque application étant mise en oeuvre par une entité simulée i donnée, une couche ASE modifiée attribuant à chaque application j mise en oeuvre, un identifiant AEq(i, j) fonction de l'application j mise en oeuvre et de l'entité simulée i qui la met en oeuvre.

3. Architecture selon la revendication 2, **caractérisée en outre en ce que** la pile ATN modifiée comporte une couche applicative ULCS modifiée (62) pour effectuer l'associations des identifiants d'applications AEq(i, j) avec des identifiants réseaux $T_{SEL}$(i, j) chaque identifiant $T_{SEL}$(i, j) correspondant de manière univoque à l'identifiant AEq(i, j) correspondant.

4. Architecture selon la revendication 3, **caractérisée en outre en ce que** la couche ULCS modifiée utilise une base de donnée (65) paramétrée par l'identifiant i de l'entité simulée et l'identifiant j de l'application considérée.

5. Architecture selon la revendication 4, **caractérisée en outre en ce que** cette base de donnée est représentée par un fichier descripteur chargé par le logiciel mettant en oeuvre le scénario de test ou de simulation considéré et accessible à la sous-routine qui gère la couche ULCS.

**Claims**

1. Architecture for simulating entities on an ATN, each simulated entity, i, implementing applications j involving exchanges of information via the ATN, through the intermediary of an ATN exchange stack, one and the same application j possibly being implemented simultaneously by a number of simulated entities i, **characterized in that** the structure of the ATN exchange stack (22) has been modified to allow all the simulated applications to be interfaced through a single ATN stack, each application being associated at the network level with a unique identifier and each network identifier corresponding to a single application.

2. Architecture for simulating entities on an ATN according to Claim 1, also **characterized in that** the modified ATN stack comprises modified ASE application layers (63) for interfacing several applications of the same type j, each application being implemented by a given simulated entity i, a modified ASE layer assigning each application j implemented an identifier AEq(i, j) dependent on the application j implemented and the simulated entity i that is implementing it.

3. Architecture according to Claim 2, also **characterized in that** the modified ATN stack comprises a modified ULCS application layer (62) for setting up the associations of the application identifiers AEq (i, j) with network identifiers $T_{SEL}$(i, ,j), each identifier $T_{SEL}$(i, j) corresponding on a one-to-one basis to the corresponding identifier AEq(i, j).

4. Architecture according to Claim 3, also **characterized in that** the modified ULCS layer uses a database (65) parameterized by the identifier i of the simulated entity and the identifier j of the application concerned.

5. Architecture according to Claim 4, also **characterized in that** this database is represented by a descriptor file loaded by the software implementing the test or simulation scenario concerned and accessible to the subroutine that manages the ULCS layer.

**Patentansprüche**

1. Architektur zur Simulation von Einheiten auf einem ATN-Netz, wobei jede simulierte Einheit i Anwendungen j einsetzt, die Austauschvorgänge über das ATN-Netz mittels eines Stacks von ATN-Austauschvorgängen durchführt, wobei die gleiche Anwendung j gleichzeitig von mehreren simulierten Einheiten i eingesetzt werden kann, **dadurch gekennzeichnet, dass** der Aufbau des ATN-Austausch-Stacks (22) verändert wurde, um die Kopplung aller simulierten Anwendungen über einen einzigen ATN-Stack zu erlauben, wobei jede Anwendung auf der Netzebene einer einzigen Benutzerkennung zugeordnet ist und jede Netzkennung einer einzigen Anwendung entspricht.

2. Architektur zur Simulation von Einheiten auf einem ATN-Netz nach Anspruch 1, außerdem **dadurch gekennzeichnet, dass** der veränderte ATN-Stack ASE-Anwendungsschichten (63) enthält, die verändert wurden, um mehrere Anwendungen desselben Typs j zu koppeln, wobei jede Anwendung von einer bestimmten simulierten Einheit i eingesetzt wird, wobei eine veränderte ASE-Schicht jeder eingesetzten Anwendung j eine Kennung AEq(i,j) zuteilt, die eine Funktion der eingesetzten Anwendung j und der simulierten Einheit i, die sie einsetzt, ist.

3. Architektur nach Anspruch 2, außerdem **dadurch gekennzeichnet, dass** der veränderte ATN-Stack eine veränderte ULCS-Anwendungsschicht (62) enthält, um die Assoziation der Anwendungskennungen AEq(i,j) mit Netzkennungen $T_{SEL}(i,j)$ durchzuführen, wobei jede Kennung $T_{SEL}(i,j)$ eindeutig der entsprechenden Kennung AEq(i,j) entspricht.

4. Architektur nach Anspruch 3, außerdem **dadurch gekennzeichnet, dass** die veränderte ULCS-Schicht eine von der Kennung i der simulierten Einheit und der Kennung j der betrachteten Einheit parametrierte Datenbank (65) verwendet.

5. Architektur nach Anspruch 4, außerdem **dadurch gekennzeichnet, dass** diese Datenbank durch eine Deskriptordatei dargestellt wird, die von der Software geladen wird, die das betrachtete Test- oder Simulationsskript einsetzt, und auf die die Subroutine zugreifen kann, die die ULCS-Schicht steuert.

FIG.1

21

Simulation Aéronef 1    Simulation Aéronef i    Simulation Aéronef i+1    Simulation Aéronef M

Pile ATN Modifiée                    22

RESEAU ATN

Pile ATN          Pile ATN          Pile ATN          Pile ATN
Système au sol 1  Système au sol j  Système au sol j+1  Système au sol N

23

FIG.2

| ADS | CM | CPDLC | FIS |
|-----|-----|-------|-----|

Application ← →

ACSE — 36

Présentation

ULCS — 31

Session

( une seule adresse OACI) — 35

Transport ← → TP4 — 34

Network ← → ES-IS CLNP — 33

Data-link ← → SNDCF — 32

PLP

Physical

## FIG.3

| ADS | CM | CPDLC | FIS |
|-----|-----|-------|-----|

Application ← →

ACSE modifiée — 36

Présentation

ULCS Modifiée — 35

Session

Adresses OACI — 37

Transport ← → TP4

Network ← → ES-IS CLNP

Data-link ← → SNDCF

PLP

Physical

## FIG.4

FIG.5

EP 1 825 608 B1

FIG.6